Europäisches Patentamt

European Patent Office

Office européen des brevets

(19)

(11) Veröffentlichungsnummer: **0 331 783**
**A1**

(12) **EUROPÄISCHE PATENTANMELDUNG**

(21) Anmeldenummer: 88103796.4

(22) Anmeldetag: 10.03.88

(51) Int. Cl.⁴: **B01J 49/00 , C02F 1/66**

(43) Veröffentlichungstag der Anmeldung:
13.09.89 Patentblatt 89/37

(84) Benannte Vertragsstaaten:
AT BE CH DE ES FR GB GR IT LI LU NL SE

(71) Anmelder: DELDUNANTULI VIZUGYI
IGAZGATOSAG
Köztársaság tér 7
H-7623 Pécs(HU)

(72) Erfinder: Kaurek, Róbert, Dipl.-Chem. Ing.
Mecsek u. 12
H-7625 Pécs(HU)
Erfinder: Kovács, Arpád, Dipl.-Chem. Ing.
Rippl Rónai u. 26
H-7626 Pécs(HU)
Erfinder: Szathmáry, Magdolna
Herman Ottó u. 4
H-7624 Pécs(HU)
Erfinder: Szenohradszki, Istvánné, Dipl.-Ing.
Nagyszkokó u. 6
H-7635 Pécs(HU)
Erfinder: Hernády, Alajos, Dr. Dipl.-Ing.
Berki Gy. u. 12
H-7624 Pécs(HU)

(74) Vertreter: Hansen, Bernd, Dr.rer.nat. et al
Hoffmann, Eitle & Partner Patentanwälte
Arabellastrasse 4 Postfach 81 04 20
D-8000 München 81(DE)

(54) Verfahren und Vorrichtung zum Entfärben und/oder Neutralisieren alkalischer Industrieabwässer und Verringern ihres Salzgehaltes, insbesondere zum Reinigen von Abwässern der Textilindustrie.

(57) Die Erfindung betrifft ein Verfahren und eine Vorrichtung zum Entfärben und/oder Neutralisieren alkalischer Industrieabwässer und zum Verringern ihres Salzgehaltes bei den Betrieben, wo für die Technologie an Ort und Stelle erzeugtes Weichwasser erforderlich ist und die Wasseren thärtung unter Anwendung von Kationenaustausch-Kunstharz durchgeführt wird.

Das Wesen des Verfahrens besteht darin, dass die während der Regenerierung des Wasserenthärters (1) entstehende, Kalzium und Magnesium enthaltende Lösung dem alkalischen Abwasser zugemischt wird, der sich bildende Abscheidungsstoff entfernt wird, ein Teil des geklärten alkalischen Wassers mit dem auf Wasserstoff basierenden Kunstharz zu einer sauren Lösung umgebildet wird und mit dieser der andere Teil des alkalischen Wassers neutralisiert wird. Die sich während der Regenerierung des auf Wasserstoff basierenden Kunstharzes bildende Salzlösung wird zur Regenerierung des Wasserenthärters (1) verwendet, bei saurer Salzlösung wird mit höchstens 1% des alkalischen Wassers neutralisiert.

Die Vorrichtung besteht aus nach dem Wasserenthärter (1) in Reihe geschalteten Lösungsspeicher (3) Mischbehälter (5), Kläreinrichtung (8), Verteilerventil (9), Ionenaustauscher (10), einer den Ionenaustauscher (10) umgehenden Umgehungsleitung (16) und einem Neutralisierbecken (15). Eine Flüssigkeitsableitung (11) des Ionenaustauschers (10) und die Umgehungsleitung (16) sind in das Neutralisierbecken (15) geführt. Eine Laugenleitung (19) führt aus der Technologie (20) in den Mischbehälter (5), während von dem Boden der Kläreinrichtung (8) eine Abschei dungsstoffableitung (17) abgezwiegt ist. Dem Ionenaustauscher (10) ist ein regenerierender Säurebehälter (27) zugeordnet, eine Salzlösungsleitung (26) führt von dem Ionenaustauscher (10) zu dem Salzlösungsbehälter (25) des Wasserenthärters (1).

Fig.1

## Verfahren und Vorrichtung zum Entfärben und/oder Neutralisieren alkalischer Industrieabwässer und Verringern ihres Salzgehaltes, insbesondere zum Reinigen von Abwässern der Textilindustrie

Die Erfindung betrifft ein Verfahren und eine Vorrichtung zum Entfärben und/oder Neutralisieren alkalischer Abwässer und Verringern ihres Salzgehaltes, wovei die Wasserenthärtung für die Industrietechnologie mittels Kationenaustausch-Kunstharz durchgeführt wird, durch Zumischen der während der Regenerierung des Kunstharzes entstehenden kalzium- und magnesiumgehaltigen Lösung zu dem alkalischen Wasser die organischen und/oder anorganischen Verunreinigungen und/oder Färbstoffe ausgeschieden werden, ein Teil der danach geklärten oder gefilterten alkalischen Wassers mit Kationenaustausch-Kunstharz ($H^+$ basis) zu einer saueren Lösung ausgebildet wird und mit dieser der andere Teil des alkalischen Wassers neutralisiert wird, während die bei der Regenerierung des Kationenaustausch-Kunstharzes ($H^+$ basis) entstehende Salzlösung zur Regenerierung der Kunstharzfüllung des Wasserenthärters verwendet wird.

Die erfindungsgemässe Vorrichtung enthält nach dem Wasserenthärter in Hinsicht auf den Flüssigkeitsstrom in Reihe geschaltete Lösungsspeicher für Lösungen mit Kalzium- und Magnesiumgehalt, Mischbehälter, Kläreinrichtung, Verteilerventil, Ionenaustauscher, eine diesen umgehende Leitung und ein Neutralisierbecken, in den Mischbehälter ist die Laugenleitung aus der Technologie eingebunden, während aus dem Boden der Kläreinrichtung eine Abscheidungsstoffableitung abgezweigt ist.

Die Erfindung löst eine wesentliche Umweltschutzaufgabe. Aus dem farbigen und einen hohen Salzgehalt aufweisenden

Industrieabwasser werden die organischen und färbenden Stoffe ausgeschieden, die bei der Neutralisierung der Alkalität entstehenden Salze werden für die Technologie in einem Kreislauf verwertet, dadurch wird praktisch eine effektive biologische Nachreinigung des danach entstehenden verunreinigten Wassers gewährleistet.

Es ist allgemein bekannt, dass bei den alkalischen Industrietechnologien, zum Beispiel in der Textilindustrie nach den Aufbereitungsverfahren eine bedeutende Menge an Laugenabfällen, organischen und anorganischen Stoffe, zum Beispiel Färbstoffrückstände, Natriumionen und Salz entstehen, die biologisch nicht gereinigt werden können. Als Voraussetzung der biologischen Reinigung sind die Wiekung des Sonnenlichtes behindernden Färbstoffe aus den Abwässern zu beseitigen oder deren Gehalt ist zu verringern, die alkalischen Reaktionen sind einzustellen und der Gesamtsalzgehalt darf die Konzentration von 8 kg/m³ nicht erreichen.

In der Praxis wird die Entfärbung mit physikalischen oder chemischen Methoden durchgeführt. Unter den physikalischen Methoden hat sich die Festkörper-Flüssigkeit-Adsorbtionsmethode verbreitet, bei welcher als Adsorbent aktive Kohle, aktivierte Kieselsäure, Koks Torf, Bentonit, Zeolith, oder gleiche Wirkung wie diese aufweisende andere Stoffe verwendet werden. Diese Stoffe werden mit dem Abwasser in Kontakt gebracht und nach dem erfolgten Zusammenwirken dieser wird die bereits entfärbte Lösung abgeleitet.

Unter den chemischen Methoden der Entfärbung sind die am meisten bekannten und verwendeten Lösungen die mittels Klärung, Abscheiden und unter Anwendung von Oxidationsmitteln erfolgenden Entfärbungsmethoden.

Die Methoden der Entfärbung sind ausführlich in den Ausgaben Dr. Benedek Pál "Viztisztitás, szennyviztisztitás zsebkönyv"/"Handbuch der Wasserreinigung, Abwasserreinigung"/ Technischer Verlag 1982,S.59-393, und Migray Emöd "Ipari vizgazdálkodás"/"Industriewasserwirtschaft"/ Ausgabe der OVH /Staatliche Amt für Wasserwesen/ 3. Band, Seiten 52-64 beschrieben.

Die erwähnten Entfärbungsverfahren beanspruchen kontinuierlich zugeführte Adsorbenten, teuere Chemikalien, für diese speziell ausgebildete Vorrichtungen, gegenüber Chemikalien beständige Konstruktionsmaterialien.

Eine allgemein bekannte Methode für die chemische Neutralisierung der Abwässer ist die Kompensation des pH-Wertes, bei welcher dem alkalischen Abwasser eine Säure bis zum Erreichen eines pH-Wertes von 6-8 zugeführt wird. Dabei ist für das Mischen und entsprechende Beckenabmessungen zu sorgen. Diese Methoden sind in der folgenden Fachliteratur näher beschrieben: Nádori Károly "Ipari vizgazdálkodás" /Industriewasserwirtschaft/ 6. Ausgabe des OVH, 1968,S. 125-131, sowie Dr. Chovanecz Tibor "Ipari viz elökészitése" /Vorbereitung von Industriewasser/ Technischer Bücherverlag, 1979 ,S.115-142.

Das bekannte Neutralisierverfahren geht mit einem kontinuierlichen und nicht rückgewinnbaren Mehrverbrauch teuerer Chemikalien, zum Beispiel Säuren einher, daneben erhöht die auf diese Weise durchgeführte Neutralisierung selbst den gesamten gelösten Materialgehalt des Wasser, somit auch dessen Salzgehalt, was zur Verschlechterung der Bedingungen der biologischen Reinigung führt.

Bisher wurde keine allgemein verwendete und wirtschaftliche Methode zur Verringerung des Salzgehaltes von Indust rieabwässern entwickelt. Es wurden Experimente durchgeführt, die zur Erzeugung von Trinkwasser, bzw. zum Entsalzen von Meerwasser verwendeten Verfahren zu übertragen. Derartige Verfahren sind zum Beispiel die Destillation, umgekehrte Osmose und deren Varianten, oder die Anwendung der in Reihe geschalteten Füllungen der Kationen- und Anionenaustauscher. Literaturstellen dafür sind die Broschüre "Umwelt und Technik" 7.h. Nr. 4, 1984, Dez. S.6-8, sowie Melliand Textilberichte 5/1983 S.365-372, Artikel von Prof. Dr. Ing. Gerhard Egber.

Diese bekannten Methoden zur Verringerung des Salzgehaltes sind äusserst energieaufwendig, beanspruchen teuere und spezielle Vorrivhtungen, deren Bedienung und Instandhaltung kompliziert ist und hochqualifizierte Fachleute beansprucht. Zur Entsalzung von Abwässern sind diese Methoden nicht geignet und haben sich in der Industriepraxis auch nicht verbreitet.

Die am häufigsten in der Praxis verwendete Methode zur Verringerung der schädlichen Wirkungen besteht darin, dass das Abwasser vor der Zuführung zur Nach reinigungsvorrichtung mit frischem Wasser bis zu einem solchen Mass verdünnt wird, bis die Konzentration der Verunreinigungen unter ein zugelassenes Mass sinkt. Diese Praxis beansprucht einen Mehrverbrauch an frischem Industriewasser, in vielen Fällen an Trinkwasser, was die Produktion in Hinsicht auf deren Wirtschaftlichkeit bedeutend beeinflusst.
Aufgrund der jahrzehntelang ausgeübten Praxis wurde auf dem Industriesektor die Beachtung der Gesichtspunkte des Umweltschutzes im allgemeinen auf die Weise ausgelegt, dass eine Neutralisierung und Verdünnung bis zum Erreichen der in amtlichen Vorschriften festgelegten Materi alkonzentration durchzuführen ist und danach das Abwasser weitergelassen werden kann.

Die Erfindung beruht auf der Erkenntnis, dass
- bei alkalischen, gefärbten Industrieabwässern in den Fällen, wenn sich während der Erzeugung von Industrieweichwasser eine Kalzium- und Magnesiumionen beinhaltende Lösung bildet, die Kalzium- und Magnesiumionen zum Abbinden und Verringern der Verunreinigungen des Abwassers geeignet sind, wenn diese Ionen dem alkalischen gefärbten Abwasser zugemischt werden.
- wenn das entfärbte, von einem Teil der Verunreinigungen befreite, geklärte alkalische Wasser mit Kationenaustausch-Kunstharz (H$^+$ basis) in Kontakt gebracht wird, eine saure Lösung entsteht, die zum Neutralisieren des alkalischen Wassers geeignet ist.
- wenn die Regenerierung des Kationenaustausch-Kunstharzes (H$^+$ basis) mit Salzsäure (Chlorwasserstoff) durchgeführt wird, eine Salzlösung erhalten wird, die zur Regenerierung der Kation naustausch-Kunstharzfüllung (H$^+$ basis) des Wasserenthärters geeignet ist.

Anhand dieser Erkenntnisse ist durch die Erfindung ein bedeutender Teil des die schädliche Verunreinigung hervorrufenden Natriums in Umlauf haltbar und dieser gelangt nicht in das lebende Wasser.

Die Kalzium und Magnesium enthaltende Lösung wird gemäss der Erfindung genutzt, diese verunreinigt die Umwelt nicht, der mit diesen abgebundene Niederschlag kann nach Entwässerung zum Beispiel für die Ziegelherstellung genutzt werden. Von dem in der Technologie bei der Verdampfung entstehenden alkalischen, verunreinigten Wasser kann ein Teil der Lauge nützlich verwendet werden, daraus entsteht einerseits durch Ionentausch die zur Neut ralisierung verwendete saure Lösung und anderseits Salz, bzw. ein kleiner Teil davon kann zur Neutralisierung der Salzlösung genutzt werden. Die Lauge verunreinigt die Naturumgebung nicht, bzw. belastet diese nicht.

Die Erfindung ist ein Verfahren zum Entfärben und/oder Neutralisieren alkalischer Industrieabwässer und Verringern ihres Salzgehaltes, wobei für die Technologie die Wasserenthärtung unter Anwendung von Kationenaustausch-Kuntsharz durchgeführt wird und gemäss der Erfindung die während der Regenerierung der Ionentausch-Kunstharzfüllung des Wasserenthärters entstehende, Kalzium und Magnesium enthaltende Lösung dem bei der Technologie entstehenden alkalischen Wasser zugemischt wird, die organischen und/oder anorganischen Verunreinigungen und/oder Färbstoffe abgeschieden werden, der Abscheidungsstoff aus dem alkalischen Wasser entfernt wird, das alkalische Wasser geklärt oder gefiltert wird, ein Teil des geklärten oder gefilterten alkalischen Wassers unter Anwendung von Kationenaustausch-Kunstharz (H$^+$ basis) zu einer sauren Lösung umgebildet wird und mit dieser der andere Teil des alkalischen Wassers neutralisiert wird, dann das neutralisierte Abwasser auf an sich bekannte Weise weitergereinigt und während der mit Säure erfolgenden Regenerierung des auf Wasserstoff beruhenden Kationenaustausch-Kunstharzes eine Salzlösung erzeugt wird, die zur Regenerierung des Kationenaustausch-Kunstharzes des Wasserenthärters verwendet wird.

Einweiteres Merkmal der Erfindung besteht darin, dass mit höchstens 1% des während der Technologie entstehenden alkalischen Wassers die während der Regenerierung des Kationenaustausch-Kunstharzes von H$^+$-basis entstehende saure Salzlösung neutralisiert wird, ein Teil des alkalischen Wassers dagegen gegebenenfalls verdampft wird.

Bei einer weiteren Durchführungsform der Erfindung wird die bei der Regenerierung des Wasserenthärters entstehende, Kalzium und Magnesium enthaltende Lösung vor dem Zumsschen zu dem alkalischen Wasser gesammelt, die Menge der Komponenten gemessen, und die Menge der Kationen vorzugsweise durch Dosieren von Kalzium eingeregelt.

Ein weiteres Merkmal des erfindugnsgemässen Verfahrens besteht darin, dass das Aufteilungsverhältnis der zu dem Kationenaustauscher mit $H^+$-basis und zur Neutralisierung gelangenen geklärten alkalischen Wassers auf die Weise gewählt wird, dass das neutralisierte Abwasser einen pH-Wert von 6,5-7,5 aufweist und mittels Messung dieses Wertes das Aufteilungsverhältnis geregelt wird.

Ein weiteres Merkmal des erfindungsgemässen Verfahrens besteht darin, dass die Neutralisierung des alkalischen Wassers in einem Becken durchgeführt wird und das neutralisierte Abwasser vor der weiteren Reinigung für eine Zeitdauer von mindestens 10 Minuten abstehen gelassen wird.

Die Erfindung ist weiterhin eine Vorrichtung zur Durchführung des obengeschriebenen Verfahrens, die einen zur Erzeugung des technologischen Weichwassers dienenden Wasserenthärter aufweist und gemäss der Erfindung in Hinsicht auf den Flüssigkeitsstrom nach dem Wasserenthärter mittels Leitungen in Reihe geschaltete Lösungsspeicher zum Sammeln von Kalzium und Magnesium, Mischbehälter, Kläreinrichtung, Verteilerventil, Ionenaustauscher, eine zu dem Ionenaustauscher parallel geschaltete Umgehungsleitung und ein Neutralisierbecken aufweist, wobei eine Flüssigkeitsableitung und die Umgehungsleitung des Ionenaustauschers an dem Neutralisierbecken angeschlossen sind, während eine von der Technologie ankommende Laugenleitung an dem Mischbehälter angeschlossen ist und von dem Boden der Kläreinrichtung eine Abscheidungsstoffableitung abgezweigt ist.

Eine bevorzugte Ausführungsform der Erfindung ist dadurch gekennzeichnet, dass an dem Ionenaustauscher ein regenerierender Säurebehälter angeschlossen ist, während eine von dem Ionenaustauscher abgeleitete Salzlösungsleitung an dem Salzlösungsbehälter des Wasserenthärters angeschlossen ist.

Nachstehend wird die Erfindung anhand bevorzugter Ausführungsbeispiele unter Bezugnahme die beigefügte Zeichnung näher erläutert. In der Zeichnung zeigt

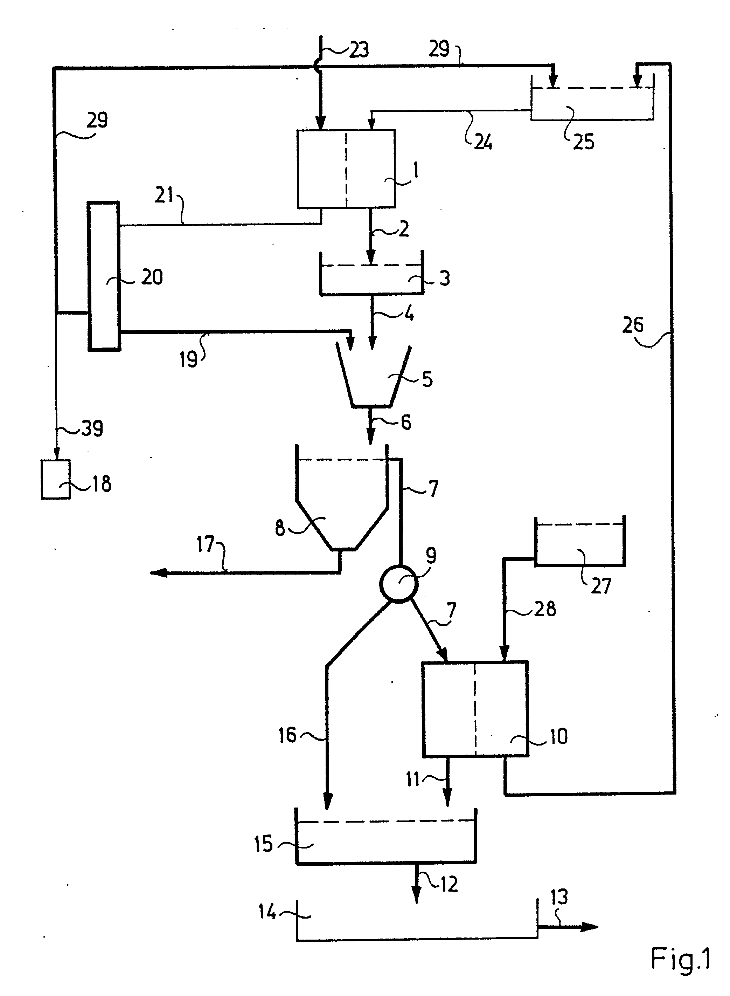

Fig. 1 eine prinzipielle Anordnung der erfindungsgemässen Vorrichtung

Wie es aus Fig. 1 ersichtlich ist eine Rohwasserleitung 23 über einen Wasserenthärter 1 und eine Weichwasserleitung 21 auf bekannte und übliche Weise mit der Technologie 20 verbunden. Für die Regenerierung des Wasserenthärters 1 dient ein Salzlösungsbehälter 25.

Gemässe dem vorliegenden Beispiel dient die in der Fig. 1 veranschaulichte Vorrichtung zur Verarbeitung des aus der Technologie 20 über eine Laugenleitung 19 entweichenden alkalischen Industrieabwassers. Die Technologie 20 ist in dem vorliegenden Beispiel eine Ausrüstunganstalt der Textilindustrie, genauer eine Zwirnerei zur Verarbeitung von Baumwollgarn, die Weichwasser, das mittels des Wasserenthärters 1 erzeugt wird, in einer Menge von 1240 m³/d verbraucht und durch Zugabe von 2500 kg/d Natriumhydroxid mit einer Lauge mit einem pH-Wert von 14 arbeitet.

Ober die Rohwasserleitung 23 werden im Durchschnitt 55 mg/dm³ Kalzium und 27 mg/dm³ Magnesium dem Wasserenthärter 1 zugeführt, was eine Menge von 68 kg/d an Kalzium und 33 kg/d an Magnesium bedeutet. Der Wasserenthärter 1 besteht im wesentlichen aus zwei, in sechsstündigen Zyklen abwechselnd funktionierenden jeweils einen Rauminhalt von 2,5 m³ aufweisenden und mit Varion KS Kunstharz gefüllten, parallelen Säulen. Zur Generierung der Kunstharzfüllung werden 1400 kg/d Natriumchlorid verwendet. Bei der erfindungsgemässen Vorrichtung wird in dem vorliegenden Beispiel das während der Regenerierung des Kunstharzes des Wasserenthärters 1 entstehende Eluat, und zwar eine Kalzium und Magnesium enthaltende Lösung mit Hilfe einer Eluatleitung 2 und eines Lösungsspeichers 3 gesammelt. Der Rauminhalt des Lösungsspeichers 3 beträgt 50 m³, in den 25 m³/d Lösung geleitet wird. Der Mischbehälter 5, der eine Mischung durch Flüssigkeitsströmung realisiert, weist einen Rauminhalt von 3 m³ auf. An dem Mischbehälter 5 sind von oben eine Lösungsleitung 4 und die Laugenleitung 19 angeschlossen. Aus dem Boden des Mischbehälters 5 ist eine Gemischleitung 6 in die Kläreinrichtung 8 über ein Dämpfungsstück (in der Figur nicht dargestellt) geführt. Die Kläreinrichtung 8 ist ein unten konisch ausgebildeter zylindrischer Behälter mit einem Rauminhalt von 120 m³ und einer Höhe von 4 m, von diesem Behälter ist eine Abscheidungsstoffableitung 17 abgezweigt.

Von der Kläreinrichtung 8 ist aus der Höhe ihres Flüssigkeitsstandes über einen Randkanal eine Wasserleitung 7 für das geklärte Wasser abgezweigt, diese Wasserleitung 7 weist einen Durchmesser von 300 mm auf. Die Wasserleitung 7 ist über ein Verteilerventil 9 in den Ionenaustauscher 10 eingeführt. Aus dem Verteilerventil 9 führt eine Umgehungsleitung 16, die einen Durchmesser von 100 mm aufweist, in ein Neutralisierbecken 15, das einen Rauminhalt von 15 m³ aufweist.

Der Ionenaustauscher 10 besteht im wesentlichen aus zwei stehenden Säulen mit jeweils einem Rauminhalt von 7,5 m³, die mit auf Kationenaustausch-Kunstharz ($H^+$-basis) gefüllt sind und zur in zwölfstündigen Zyklen einander abwechselnd erfolgenden Aufbereitung von insgesamt 800 m³/d Flüssigkeit bemessen sind.

Dem Ionenaustauscher 10 ist ein Säurebehälter 27 zugeordnet, dessen Rauminhalt 5 m³ beträgt und der mit Salzsäure gefüllt ist. Von dem Ionenaustauscher 10 führt eine Salzlösungsleitung 26 zu dem dem Wasserenthärter 1 zugeordneten Salzlösungsbehälter 25.

Eine Flüssigkeitsableitung 11 des Ionenaustauscher 10 ist an dem Neutralisierbecken 15 angeschlossen.

Gemäss dem vorliegenden Beispiel sind also im Sinne der Erfindung die Eluatleitung 2, der Lösungsspeicher 3, über die Lösungsleitung 4, der Mischbehälter 5 mit der Gemischleitung 6, die Kläreinrichtung 8 mit der Wasserleitung 7 für das geklärte alkalische Wasser über das Verteilerventil 9 mit dem Ionenaustauscher 10 und über die Flüssigkeitsableitung 11 bis zu dem Neutralisierbecken 15 in Hinsicht auf den Flüssigkeitsstrom in Reihe geschaltet. Die aufgezählten Elemente bilden mit der Abscheidungsstoffableitung 17 der Kläreinrichtung 8, der den Ionenaustauscher 10 umgehenden Umgehungsleitung 16, dem dem Ionenaustauscher 10 zugeordneten regenerierenden Säurebehälter 27 und der von dem Ionenaustauscher 10 zu dem Salzlösungsbehälter 25 führenden Salzlösungsleitung 26 gemeinsam eine solche Vorrichtung, mit Hilfe welcher das aus der Technologie 20 über die Laugenleitung 19 abgeleitete alkalische Industrieabwasser unter Anwendung des erfindungsgemässen Verfahrens entfärbt werden kann, die Menge der Verunreinigungen verringert werden kann, der alkalische Charakter neutralisiert werden kann, und der Salzgehalt aus der Vorrichtung über die Entleerungsleitung 12 in die biologische Reinigungsvorrichtung 14 geleiteten

Abwassers bedeutend verringert werden kann. Ein grosser Teil der Salzlösung aus der Vorrichtung gelangt nicht in die biologische Reinigungsvorrichtung 14 und über diese in den Ableitungskanal 13, sondern wird über die Salzlösungsleitung 26 in den Kreisprozess zurückgeleitet.
In dem obigen Beispiel wurde das erfindungsgemässe Verfahren für die Ganrzurichtung in der Textilindustrie, d.h. für den Fall der Behandlung des gefärbten alkalischen Abwassers, das bei der Merzerisation, Entfärbung und Färbung des Garns entsteht, beschrieben.

Die Merzerisation in der Technlogie 20 bedeutet die Behandlung von Baumwolle oder Zellulose beinhaltenden Garns in einem alkalischen Medium, wodurch dieses weicher und seidig leuchtend wird.

Die Behandlung erfolgt bei einer Temperatur von 18-20 °C in einer konzentrierten Natriumhydroxid-Lösung- Ein grosser Teil, im Durchschnitt 95% der Lauge wird zurückgeführt und erneut verwendet. Der Laugenbedarf bertägt für 1 kg Garn 470 g Natriumhydroxid. Nach der alkalischen Behandlung wird das Garn mit heissem, und danach kaltem Weichwasser gespült. Der eine höhere Konzentration aufweisende Teil des alkalischen Spülwassers wird über die Laugenleitung 39 in den Laugenverdampfer 18 geleitet, bzw. ca. 1% dessen wird im Sinne der Erfindung über die Neutralisierleitung 29 in dem Salzlösungsbehälter 25 zur Neutralisierung der Restsäure verwendet.

Von der Merzerisation werden durchschnittlich 250 m³/d an alkalischen Spülwasser abgeleitet, davon werden durchschnittlich 80 m³/d an den Laugenverdampfer, 5 m³/d in den Salzlösungsbehälter 25 und die restlichen 165 m³/d, die den wässerigeren und verunreinigten Teil des alkali schen Spülwassers bilden, über die Laugenleitung 19 abgeleitet.

In der Technologie 20 wird nach der Merzerisation und gegebenenfalls Säurebehandlung ein Bleichen (Entfärben) mit Natriumhypochlorid oder Hydrogenperoxid durchgeführt, wobei sich der pH-Wert zwischen 8,4 und 10,5 ändert. Bei der Färbung, die im allgemeinen in einem alkalischen Medium unter Verwendung direkter oder reaktiver Färbstoffe durchgeführt wird, bilden die Detergenten, die Zusatzstoffe des Farbbades während ihrer Spülung den grössten Teil der Verunreinigungen. Die Menge der Verunreinigungen ist insbesondere bei der schwefelschwarzen Färbung besonders gross. In Hinsicht auf die gesamten Salzverunreinigungen erhöht insbesondere die reaktive und schwefelschwarze Färbung die Salzverunreinigung.

Die Menge der nach dem Entfärben und Färben entweichenden Abwässer und deren Spülwassers beträgt im allgemeinen 640 m³.d, ihre Alkalireaktion ändert sich in weiten Grenzen zwischen 12 - 5,4. Die Bleichlösungen und Färblösungen werden gemeinsam mit dem verunreinigten Teil des alkalischen Spülwassers der Merzerisation über die Laugeleitung 19 in den Mischbehälter 5 geleitet. Die Gesamtmenge des alkalischen verunreinigten Wassers beträgt im Durchschnitt 805 m³/d, für seine Alkalität ist ein pH-Wert von 12,4-13 charakteristisch, während sich der gesamte Salzgehalt in den Grenzen von 4,3-4,5 kg/m³ befindet und die Natriumionenmenge bei 1,6 kg/m³ liegt. Die Farbe der alkalischen Flüssigkeit ist variabel, am häufigsten dunkelbraun.

In den Falle des vorliegenden Beispiels ist die Voraussetzung der Anwendung der Erfindung ebenfalls, dass für die alkalische Abwässer abgebende Technlogie mittels eines Wasserenthärters 1, der mit Kationenaustausch-Kunstharz gefüllt ist, lokal Weichwasser erzeugt wird. Während der Regenerierung des Wasserenthärters 1 entsteht eine Kalzium und Magnesium enthaltende Lösung, die bisher als Verunreinigung in einen Ableitungskanal abgeleitet wurde. Gemäss der Erfindung werden die aus 1240 m³/d Rohwasser auf diese Weise entstehenden 68 kg/d Kalzium und 33 kg/d Magnesium über die Eluatleitung 2 in den Mischbehälter 5 geleitet. Die sich bildende Menge hängt natürlich von der Härte des über die Rohwasserleitung ankommenden Rohwassers ab.

In dem Wasserenthärter 1 läuft folgender Vorgang bei der Wasserenthärtung ab:

$$2 R - SO_3Na + Ca^{2+} \rightarrow /R - SO_3/_2 Ca + 2 Na^3$$
$$2 R - SO_3Na + Mg^{2+} \rightarrow /R - SO_3/_2 Mg + 2 Na^{++}$$

Während der Regenerierung des Wasserenthärters 1:

$$/R - SO_3/_2 \ Ca + 2 \ Na \ Cl \rightarrow 2 R - SO_3Na + Ca^{2+} + 2 \ Cl^-$$
$$/R - SO_3/ \ Mg + 2 \ Na \ Cl \rightarrow 2 R - SO_3Na + Mg^{2+} + 2 \ Cl^-$$

Die sich aus dem Wasserenthärter 1 über die Eluatleitung 2 entfernende Lösung wird in dem einen Rauminhalt von 50 m³ aufweisenden Lösungsspeicher 3 gesammelt wird, dann über die Lösungsleitung 4 in den Mischbehälter 5 in einer zu dem über die Laugenleitung 19 ankommenden alkalischen Wasser proportionalen Menge geführt. In dem Mischbehälter 5 wird eine intensive Mischung durchgeführt, während welcher sich auf Wirkung des Kalziums und Magnesiums ein lockerer und flockiger Niederschlag bildet. Der Prozess ist zum Beispiel folgender:

$$2 R_1 - COO \ Na + Ca^{2+} \rightarrow /R_1 - COO/_2 \ Ca + 2 \ Na^{2+} \ bzw.$$
$$2 R_1 - COO \ Na + Mg^{2+} \rightarrow /R_1 - COO/_2 \ Mg + 2 \ Na^+$$

wobei R1 = Stearat, Palmitat

$$2 R_2O - SO_3Na + Ca^{2+} \rightarrow /R_2O - SO_3/_2 \ Ca + 2Na^+$$

wobei $R_2$ = monoalkyl Sulfate
Die Kalzium und Magnesiumsalze dieser scheiden sich ab.

$$2 R_3 - SO_3Na + Ca^{2+} \rightarrow /R_3 - SO_3/_2 \ Ca + 2Na^+$$

wobei $R_3$ = ionischer Farbstoff.
Die mit Kalzium gebundenen Farbstoffe scheiden sich ab. Aus dem Mischbehälter 5 wird über die Gemischleitung 6 das alkalische und seine Farbe verlorene Abwasser in die einen Rauminhalt von 120 m³ aufweisende Kläreinrichtung 8 geleitet und dort abstehen gelassen. In der Kläreinrichtung 8 setzt sich ein lockerer und flockiger Niederschlag ab und dieser wird über die Abscheidungsstoffableitung 17 entfernt. Über die Abscheidungsstoffableitung 17 entfernt sich auch im allgemeinen eine alkalische Flüssigkeit in einer Menge von 30-40 m³/d, diese kann jedoch mittels einer in der Figur 1 nicht dargestellten Zentrifuge oder eines Filters gereinigt werden und in den Mischbehälter 5 und/oder die Kläreinrichtung 8 zurückgeleitet werden.

Im Falle von schwerer klärbarem und entfärbbarem alkalischen Abwasser können abweichend von dem beschriebenen Ausführungsbeispiel mehrere in Reihe geschaltete Kläreinrichtungen 8, grössere Abmessungen aufweisende oder mit einem Filter versehene Absetz-Klärbehälter verwendet werden.

Das auf obenbeschriebene Weise entfärbte und geklärte alkalische Wasser wird über die Wasserleitung 7 für geklärtes alkalisches Wasser mit Hilfe des Verteilerventils 9 geteilt. In dem vorliegenden Beispiel wird von dem 1240 M³/d alkalischen Wasser eine Menge von 770 m³/d dem Ionenaustauscher 10 zugeleitet, während eine Menge von 470 m³/d über die Umgehungsleitung 16 unmittelbar in das Neutralisierbecken 15 geführt wird.

Der Ionenaustauscher 10 arbeitet mit Kationenaustausch-Kunstharz ($H^+$-basis). Mit dem über die Wasserleitung 7 für geklärtes alkalisches Wasser zugeführten geklärten alkalischen Wasser läuft folgende Reaktion ab:

$$2 R - SO_3H + 2 \ Na^+ + OH^- + Cl^- = 2 R - SO_3Na + 2 \ H^+ + Cl^- + OH^-$$

Daraus ist ersichtlich, dass sich der Natriumgehalt des alkalischen Wassers verringert, das Wasser verwandelt sich in ein saueres Wasser mit einem pH-Wert von 1-3. Dieses sauere Wasser wird über die Flüssigkeitsableitung 11 in das Neutralisierbecken 15 geleitet, wo es sich mit dem über die Umgehungsleitung 16 anströmenden alkalischen Wasser trifft und vermischt, durch die gegenseitige Neutralisierung wird ein neutrales, einen pH-Wert von 7 aufweisendes, farbloses und im Vergleich mit den bisherigen Lösungen einen geringeren Salzgehalt aufweisendes Wasser erhalten, das über die Entleerungsleitung 12 in die biologische Reinigungseinrichtung 14 und von dort über den Ableitungskanal in lebendes Wasser gelassen werden kann.

Die Regenerierung des Ionenaustauschers 10 wird mit der in dem Säurebehälter 27 befindlichen Salzsäure durchgeführt. Dabei spielt sich zwischen der über die Säureleitung 28 einströmenden Salzsäure und dem Kunstharz folgender Ionenaustausch ab:

$$R - SO_3Na + H \ Cl \rightarrow R - SO_3H + Na \ Cl$$

Die auf diese Weise gewonnene Salzlösung wird über die Salzlösungsleitung 26 in den Salzlösungsbehälter 25 geleitet. Die sich gegebenenfalls während des Ionenaustausches bildende, in den Salzlösungsbehälter 25 geratene Säure wird mit dem in der Technologie 20 in der Spülphase der Merzerisation entstehenden und eine höhere Konzentration aufweisenden alkalischen Wasser über die Neutralisierleitung neutralisiert.

In dem Fall gemäss dem vorliegenden Beispiel, wenn die Menge der sich während der Regenerierung des Wasserenthärters 1 bildenden Magnesium- und Kalziumionen zum Abscheiden der Verunreinigungen aus dem in den Mischbehälter 5 geleiteten alkalischen Wasser nicht ausreichend ist, kann dem Lösungsspeicher 3 oder dem Mischbehälter 5 Kalzium zugeführt werden, zum Beispiel in Form von Kalkmilch. Dies ist in solchen Fällen erforderlich, wenn das über die Rohwasserleitung 23 zuströmende Was er selbst auch weich ist und keine genügende Menge an Kalzium und Magnesium enthält.

In dem beschriebenen Beispiel wurde ein Tagesdurchschnitt der Verteilungsverhältnisses des über das Verteilerventil 9 an den Ionenaustauscher 10 und an die Umgehungsleitung 16 abgegebenen geklärten alkalischen Wassers angegeben. Dieses Verteilungsverhältnis kann in Abhängigkeit des sich ändernden pH-Wertes der Menge der Beimischungen und des von der Technologie 20 abgeleiteten alkalischen Wassers unterschiedlich sein. Die Optimierung der Neutralisierung kann hierbei auf die Weise erfolgen, dass der pH-Wert kontinuierlich in dem Neutralisierbecken 15 gemessen wird und auf einer in der Figur nicht dargestellten Weise in Abhängigkeit von dem pH-Wert das Verteilerventil 9 in die erforderliche Richtung verstellt wird. Es ist vorteilhaft, wenn die Messung des pH-Wertes eine automatische Regelung steuert und die Messung in dem Neutralisierbecken 15 in dem bereits gemischten und neutralisierten Flüssigkeitsteil erfolgt.

Es kann vorkommen, dass in der Technologie 20 eine Lauge oder ein alkalisches Wasser mit hoher Temperatur erforder lich ist, zum Beispiel zum Spülen, und über die Laugenleitung 19 ein alkalisches Wasser mit einer Temperatur von 60-70 ˚C abfliesst. In diesem Falle kann das über die Weichwasserleitung 21 ankommende Wasser mittels eines in die Laugenleitung 19 eingebauten Wärmetauschers im Gegenstrom erwärmt werden oder die Temperatur einer anderen Flüssigkeit durch Kühlen des alkalischen Wassers erhöht werden.

In den Fällen, wenn es nicht erforderlich ist, das alkalische Industrieabwasser zu bleichen, bzw. dieses mit Färbstoffen nicht belastet ist, ist die Anwendung des erfindungsgeämssen Verfahrens ebenfalls vorteilhaft. Die Behandlung des alkalischen Industrieabwassers mit Kalzium-und Magnesiumionen setzt auch sonstige verunreinigende Stoffe ab und auch die Neutralisierung kann mit einem hoheren Wirkungsgrad durchgeführt werden.

Die Erfindung begrenzt sich nicht auf die Technologien der Textilindustrie, sondern ist zur Reinigung jedweiger anderer alkalischer Industrieabwässer. zur Vorbehandlung vor der biologischen Reinigung bzw. zur Neutralisierung geeignet. Nachstehend werden die durch die Anwendung des erfindungsgemässen Verfahrens und der erfindungsgemässen Vorrichtung gesicherten Vorteile zusammengefasst:

- Aus den alkalischen Industrietechnologien gelangen keine umweltverschmutzende Stoffe in die Umwelt, der aus der Kläreinrichtung 8 herausgeleitete Anscheidungsstoff kann verdichtet werden und zum Beispiel bei der Ziegelherstellung verwendet werden.

- 55-60 % des bisher die Umwelt verunreinigenden Natriums und die gesamte Menge des Kalziums und Magnesiums können als nützliches Material in das Verfahren zurückgeführt werden und ein grosser Teil des Salzes belastet das abfliessende Wasser nicht.

- Das Verfahren beansprucht keine verschiedenen und teueren Chemikalien, keine speziellen, komplizierten und eine hohe Energie verbrauchenden Vorrichtungen.

- der Wasserbedarf der alkalischen Industrietechnologien wird gesenkt, zur Verdünnung ist kein Trinkwasser oder Industriewasser erforderlich.

- Das schädliche und bisher in das abfliessende Wasser gelangende Salz kann erneut zur Regenerierung des Wasserenthärters verwendet werden.

- Das Abwasser ist farblos, weist einen pH-Wert von 6,5-7,5 auf und ist zur biologischen Nachreinigung geeignet.

**Ansprüche**

1. Verfahren zum Entfärben und/oder Neutralisieren von alkalischen Industrieabwässern und zum Verringern ihres Salzgehaltes, insbesondere zur Reinigung der Abwässer der Textilindustrie, wobei für die Technologie die Wasserenthärtung unter Anwendung von Kationenaustausch-Kunstharz durchgeführt wird, **dadurch gekennzeichnet,** dass die während der Regenerierung der Ionenaustausch-Kunstharzfüllung des Wasserenthärters entstehende, Kalzium und Magneisum enthaltende Lösung dem bei der Technologie entstehenden alkalischen Wasser zugemischt wird, die organischen und/oder anorganischen Verunreinigungen und/oder Färbstoffe abgeschieden werden, der Abscheidungsstoff aus dem alkalischen Wasser entfernt wird, das alkalische Wasser geklärt oder gefiltert wird, ein Teil des geklärten oder gefilterten alkalischen Wassers mittels des Kationenaustausch-Kunststoffes ($H^+$-basis) zu einer sauren Lösung umgebildet wird und mit dieser der andere Teil des alkalischen Wassers neutralisiert wird, dann das neutralisierte Abwasser auf an sich bekannte Weise weiter gereinigt wird und während der mit Säure erfolgenden Regenerierung des auf Wasserstoff basierenden Kationenaustausch-Kunstharzes eine Salzlösung erzeugt wird, die zur Regenerierung des wasserenthärtenden Kationenaustausch-Kuntsharzes verwendet wird.

2. Verfahren nach Anspruch 1, **dadurch gekenn zeichnet,** dass mit höchstens 1% des während der Technlogie entstehenden alkalischen Wassers die während der Regenerierung des auf Wasserstoff basierenden Kationenaustausch-Kunstharzes entstehende saure Salzlösung neutralisiert wird, während ein Teil des alkalischen Wassers gegebenenfalls verdampft wird.

3. Verfahren nach Anspruch 1 und 2, **dadurch gekennzeichnet,** dass die während der Regenerierung des Wasserenthärters entstehende Kalzium und Magnesium enthaltende Lösung vor dem Einmischen in das alkalische Wasser gesammelt wird, die Menge der Komponenten gemessen wird, die Menge der Kationen vorzugsweise durch Dosieren von Kalzium eingeregelt wird.

4. Verfahren nach den Ansprüchen 1 bis 3, **dadurch gekennzeichnet,** dass das Verteilungsverhältnis dem Kationenaustauscher ($H^+$ basis) zugeführten und zur Neutralisierung geleiteten geklärten alkalischen Wassers derart gewählt wird, dass das neutralisierte Abwasser einen pH-Wert zwischen 6,5 und 7,5 aufweist und durch Messen dessen das Verteilungsverhältnis geregelt wird.

5. Verfahren nach einem der Ansprüche 1 bis 4, **dadurch gekennzeichnet,** dass die Neutralisierung des alkalischen Wassers in einem Becken durchgeführt wird und das neutralisierte Abwasser vor der weiteren Reinigung mindestens 10 Minuten lang abstehen gelassen wird.

6. Vorrichtung zur Durchführung des Verfahrens nach den vorangehenden Ansprüchen, die einen das technologische Weichwasser erzeugenden Wasserenthärter (1) aufweist, **dadurch gekennzeichnet,** dass in Hinsicht auf den Flüssigkeitsstrom nach dem Wasserenthärter (1) mittels Leitungen (2,4,6,7) in Reihe geschaltete Lösungsspeicher (3) zum Sammeln von Kalzium und Magnesium, Mischbehälter (5), Kläreinrichtung (8), Verteilerventil (9), Ionenaustauscher (10), zu dem Ionenaustauscher (10) parallel geschaltete Umgehungsleitung (16) und Neutralisierbecken (15) vorgesehen sind, wobei eine Flüssigkeitsableitung (11) des Ionenaustauschers (10) und die Umgehungsleitung (16) an dem Neutralisierbecken (15) angeschlossen sind, desweiteren eine von der Technologie (20) ankommende Laugenleitung (19) an dem Mischbehälter (5) angeschlossen ist und von dem Boden der Kläreinrichtung (8) eine Abscheidungsstoffableitung (17) abgezweigt ist.

7. Vorrichtung nach Anspruch 6, **dadurch gekennzeichnet,** dass an dem Ionenaustauscher (10) ein regenerierender Säurebehälter (27) angeschlossen ist, während die aus dem Ionenaustauscher (10) herausgeführte Salzlösungsleitung (26) an dem Salzlösungsbehälter (25) des Wasserenthärters (1) angeschlossen ist.

Fig.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 463 809 (TAO)<br>* Spalte 2, Zeile 50 - Spalte 4, Zeile 62 *<br>--- | 1 | B 01 J 49/00<br>C 02 F 1/66 |
| A | EP-A-0 009 380 (WATER REFINING CO.)<br>* Seiten 11-13 *<br>--- | 1 | |
| A | US-A-3 977 968 (ODLAND)<br>* Spalte 6, Zeile 60 - Spalte 8, Zeile 24 *<br>--- | 1 | |
| A | GB-A-1 099 117 (SIMONIS)<br>* Seite 6, Zeilen 24-117 *<br>----- | 1 | |

RECHERCHIERTE SACHGEBIETE (Int. Cl.4)

B 01 J
C 02 F

Der vorliegende Recherchenbericht wurde für alle Patentansprüche erstellt

| Recherchenort | Abschlußdatum der Recherche | Prüfer |
|---|---|---|
| DEN HAAG | 07-11-1988 | WENDLING J.P. |

EPO FORM 1503 03.82 (P0403)